# EUROPEAN PATENT APPLICATION

(11) **EP 4 783 430 A1**
(43) Date of publication of application: **29.07.2026**
(21) Application number: 24884461.5
(22) Date of filing: 18.10.2024
(51) Int. Cl.: H02K 7/116, H02K 7/06, B66C 23/82

(54) **MULTI-MOTOR HEAVY-LOAD ELECTRIC CYLINDER FOR CRANE**

(30) Priority: 03.11.2023 CN 202311459397
(71) Applicant: Xuzhou Heavy Machinery Co., Ltd., Xuzhou, Jiangsu 221004 (CN)
(72) Inventor: CHEN, Xiangdong, Xuzhou, Jiangsu 221004 (CN); HU, Xiaodong, Xuzhou, Jiangsu 221004 (CN); ZHU, Tao, Xuzhou, Jiangsu 221004 (CN); LIANG, Qiong, Xuzhou, Jiangsu 221004 (CN); QI, Wendi, Xuzhou, Jiangsu 221004 (CN); YUAN, Ruichen, Xuzhou, Jiangsu 221004 (CN); ZHOU, Jianhang, Xuzhou, Jiangsu 221004 (CN)
(74) Representative: Bayramoglu et al.
(86) International application number: PCT/CN2024/125748
(87) International publication number: WO 2025/092457

(57) **Abstract**

This application discloses a multi-motor high-load electric cylinder for a crane in the technical field of electric cylinders, and is intended to solve the problem that a conventional electric cylinder in the prior art, in which a single motor drives a reduction gearbox, is unable to meet high-load and long-stroke requirements. The electric cylinder includes a plurality of drive assemblies, a reduction gearbox housing, and a cylinder barrel. The cylinder barrel is connected to one side of the reduction gearbox housing. The plurality of drive assemblies are uniformly disposed on the reduction gearbox housing around the rod sleeve. The lead screw is disposed in a rod sleeve. The rod sleeve is sleeved inside the cylinder barrel. One end of the rod sleeve is provided with a lead screw nut, and another end of the rod sleeve extends out of the cylinder barrel and is connected to a rod head. The lead screw nut is threadedly connected to the lead screw. This application can employ a multi-motor drive mechanism to meet requirements such as a high load and a long stroke of a crane-specific electric cylinder.

## Description

### TECHNICAL FIELD

This application relates to the technical field of electric cylinder machinery, and in particular, to a multi-motor high-load electric cylinder for a crane.

### BACKGROUND

An electric cylinder generally includes a linear actuator, a transmission mechanism, and a motor. The electric cylinder is characterized by low noise and no leakage. In many scenarios, an electric cylinder is used in place of a conventional hydraulic cylinder. The electric cylinder is increasingly widely used in industry. A conventional electric cylinder available currently typically uses a single motor to drive a speed reduction mechanism, such as a gear reducer, synchronous belt, or synchronous chain, which in turn drives a ball screw to control extension and retraction of a cylinder barrel. This structure is generally suitable for low-load conditions. Synchronous belts and synchronous chains are characterized by a low load-bearing capacity, low transmission efficiency, and a short lifespan, and therefore, are applicable in a narrow range, and are merely suitable for low-end equipment with light loads, low control precision requirements, and a short stroke. However, for electric cylinders with heavy loads, long strokes, and high precision, the mechanism in which a single motor drives a gear reducer, a synchronous belt, or a synchronous chain is unable to meet application requirements, and incurs a large structural size and high cost.

Electric cylinders for use in cranes are generally characterized in high loads and long strokes, and impose strict requirements on the installation position and space. For a conventional electric cylinder in which a single motor drives a gear reduction mechanism, when the load requirements are met, the drive motor and the speed reduction mechanism are typically large in size and unable to meet crane installation requirements. Moreover, due to the special operating conditions of electric cylinders for cranes, a single-motor drive mechanism is unable to satisfy both speed and efficiency requirements simultaneously. Therefore, a new drive mechanism needs to be designed for a high-load electric cylinder for use in a crane.

### SUMMARY

An objective of this application is to overcome the disadvantages in the prior art and provide a multi-motor high-load electric cylinder for a crane. This application can employ a multi-motor drive mechanism to meet requirements such as a high load and a long stroke of a crane-specific electric cylinder.

To achieve the above objective, this application puts forward the following technical solutions: a multi-motor high-load electric cylinder for a crane, including: a plurality of drive assemblies, a reduction gearbox housing, and a cylinder barrel. The cylinder barrel is connected to one side of the reduction gearbox housing. The plurality of drive assemblies are uniformly disposed on the reduction gearbox housing around the cylinder barrel.

Each of the drive assemblies includes a drive motor, an input shaft, and an intermediate shaft. The drive motor is connected to the input shaft. The input shaft is provided with an input-shaft driving gear. The intermediate shaft is provided with an intermediate-shaft first-stage driven gear and an intermediate-shaft second-stage driving gear; the intermediate-shaft first-stage driven gear meshes with the input-shaft driving gear. An output shaft is provided at a middle of the reduction gearbox housing. The output shaft extends into the cylinder barrel and is connected to a lead screw. The output shaft is provided with an output-shaft gear. The output-shaft gear meshes with the intermediate-shaft second-stage driving gear.

The lead screw is disposed in a rod sleeve. The rod sleeve is sleeved inside the cylinder barrel. One end of the rod sleeve is provided with a lead screw nut, and another end of the rod sleeve extends out of the cylinder barrel and is connected to a rod head. The lead screw nut is threadedly connected to the lead screw.

Optionally, the input shaft, the intermediate shaft, and the output shaft are each connected to the reduction gearbox housing through a bearing.

Optionally, the bearing includes a left bearing and a right bearing. The input shaft, the intermediate shaft, and the output shaft each extend through the reduction gearbox housing and are each connected to two sides of the gearbox housing through the left bearing and the right bearing.

Optionally, a base is connected to an opposite side of the reduction gearbox housing, the opposite side being connected to the cylinder barrel. The base is coaxial with the cylinder barrel. The base is configured to be connected to a slewing platform of the crane. The rod head is configured to be connected to a boom of the crane.

Optionally, the lead screw nut is in sliding fit engagement with an interior of the cylinder barrel.

,Optionally, an end portion of the cylinder barrel is in sliding fit engagement with the rod sleeve such that the rod sleeve is extendable and retractable in the cylinder barrel.

Optionally, the multi-motor high-load electric cylinder for a crane further includes a lead screw guide bushing. The lead screw guide bushing is disposed at one end of the lead screw and is in sliding fit engagement with an inner wall of the rod sleeve, the end being located away from the lead screw nut. The lead screw guide bushing is configured to provide guiding and limiting functions during extension and retraction of the rod sleeve.

Compared with the prior art, this application achieves at least the following beneficial effects:
In this application, a plurality of drive assemblies are provided, and the number of the drive assemblies can be increased or decreased according to load and power output requirements of the crane. The sizes of the motor and the reduction gearbox can be reduced using the plurality of drive assemblies, thereby facilitating installation and reducing cost.

In this application, the operating mode of the drive motor can be selected according to load conditions, so that the drive motor always operates in a high-efficiency state, thereby providing a high load-bearing capacity and a long transmission stroke, and meeting the high-load electric cylinder requirement of a crane.

### BRIEF DESCRIPTION OF THE DRAWINGS

FIG. 1 is a schematic diagram of a structure in which a multi-motor high-load electric cylinder for a crane employs two drive assemblies according to an embodiment of this application;
FIG. 2 is a schematic diagram of an installation structure in which a multi-motor high-load electric cylinder for a crane employs two drive assemblies according to an embodiment of this application;
FIG. 3 is a schematic diagram of a structure in which a multi-motor high-load electric cylinder for a crane employs three drive assemblies according to an embodiment of this application;
FIG. 4 is a schematic diagram of an installation structure in which a multi-motor high-load electric cylinder for a crane employs three drive assemblies according to an embodiment of this application;
FIG. 5 is a schematic diagram of a structure in which a multi-motor high-load electric cylinder for a crane employs four drive assemblies according to an embodiment of this application; and
FIG. 6 is a schematic diagram of an installation structure in which a multi-motor high-load electric cylinder for a crane employs four drive assemblies according to an embodiment of this application.

List of reference signs: 1. drive assembly; 2. drive motor; 3. input shaft; 4. intermediate shaft; 5. reduction gearbox housing; 6. input-shaft driving gear; 7. intermediate-shaft first-stage driven gear; 8. intermediate-shaft second-stage driving gear; 9. output shaft; 10. output-shaft gear; 11. bearing; 12. base; 13. lead screw; 14. lead screw nut; 15. cylinder barrel; 16. rod sleeve; 17. rod head; 18. lead screw guide bushing; 19. boom; 20. slewing platform.

### DETAILED DESCRIPTION OF THE EMBODIMENTS

The following describes this application in further detail with reference to accompanying drawings. The following embodiments are merely intended to describe the technical solutions of this application more clearly, but not intended to limit the protection scope of this application.

Understandably, in the description of this application, a directional or positional relationship indicated by the terms such as "center", "longitudinal", "transverse", "up", "down", "front", "back", "left", "right", "vertical", "horizontal", "top", "bottom", "in", and "out" is a directional or positional relationship based on the illustration in the accompanying drawings, and is merely intended for ease or brevity of description of this application, but does not mean or imply that the indicated device or component is necessarily located in the specified direction or constructed or operated in the specified direction. Therefore, such terms are not to be understood as a limitation on this application. In the description of this application, unless otherwise specified, "a plurality of" means two or more.

In the description of this application, it is hereby noted that, unless otherwise expressly specified and qualified, the terms "mount", "concatenate", and "connect" are generic in a broad sense, for example, mean a fixed connection, a detachable connection, or an integrated connection; mean a mechanical connection or electrical connection; mean a direct connection or indirect connection implemented through an intermediary; or mean internal communication between two components. A person of ordinary skill in the art can understand the specific meanings of the terms in this application according to the specific context.

### Embodiment 1

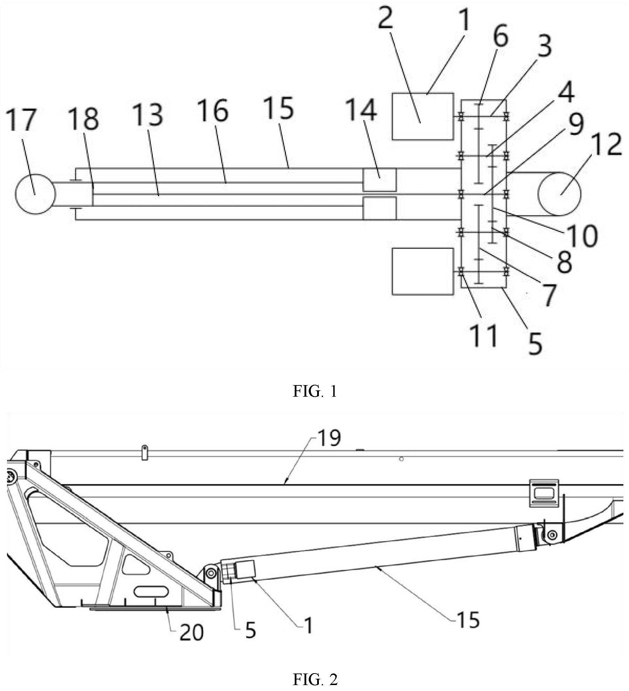

As shown in FIG. 1, an embodiment of this application provides a multi-motor high-load electric cylinder for a crane, including: two drive assemblies and a reduction gearbox housing 5. A cylinder barrel 15 and a base 12 are connected to two sides of the reduction gearbox housing 5 respectively. The base 12 is coaxial with the cylinder barrel 15. The two drive assemblies are disposed on two sides of the cylinder barrel 15 respectively, and are connected to the reduction gearbox housing 5.

An output shaft 9 is provided in the middle of the reduction gearbox housing 5. The output shaft 9 extends into the cylinder barrel 15 and is connected to a lead screw 13. Each drive assembly includes a drive motor 2, an input shaft 3, and an intermediate shaft 4. The input shaft 3, the intermediate shaft 4, and the output shaft 9 each extend through the reduction gearbox housing 5 and are connected to the reduction gearbox housing 5 through a left bearing and a right bearing on two sides respectively.

The drive motor 2 is connected to the input shaft 3. The input shaft 3 is provided with an input-shaft driving gear 6. The intermediate shaft 4 is provided with an intermediate-shaft first-stage driven gear 7 and an intermediate-shaft second-stage driving gear 8. The output shaft 9 is provided with an output-shaft gear 10. The input-shaft driving gear 6 meshes with the intermediate-shaft first-stage driven gear 7. The intermediate-shaft second-stage driving gear 8 meshes with the output-shaft gear 10.

A rod sleeve 16 is sleeved within the cylinder barrel 15. The lead screw 13 is disposed within the rod sleeve 16. One end of the rod sleeve 16 is connected to a lead screw nut 14, and the other end extends out of the cylinder barrel 15 and is connected to a rod head 17. The lead screw nut 14 is in sliding fit engagement with an inner bore of the cylinder barrel 15, and is threadedly connected to the lead screw 13. A lead screw guide bushing 18 is further provided at one end of the lead screw 13 near the rod head 17. The lead screw guide bushing 18 is in sliding fit engagement with an inner bore of the rod sleeve 16, and is configured to provide guiding and limiting functions during extension and retraction of the rod sleeve 16.

In this embodiment, the lead screw 13 may be a planetary roller screw or a ball screw. The input-shaft driving gear 6, the intermediate-shaft first-stage driving gear 7, the intermediate-shaft second-stage driving gear 8, and the output-shaft gear 10 may be parallel-shaft gears or planetary gears.

As shown in FIG. 2, the electric cylinder with two drive assemblies is used as a crane boom cylinder. During installation, the base 12 is connected to a pin hole on the slewing platform 20 of the crane through a fixing pin, and the rod head 17 is connected to the pin hole on the boom 19 of the crane through a fixing pin.

The working principles of the electric cylinder with two drive assemblies are as follows:
When the electric cylinder is under medium-to-heavy load conditions, both drive motors 2 output power simultaneously.

Specifically, under medium-to-heavy load extension conditions, both drive motors 2 rotate forward at the same time. The power from the drive motors 2 is transmitted sequentially through the input shaft 3, input-shaft driving gear 6, intermediate-shaft first-stage driven gear 7, intermediate shaft 4, intermediate-shaft second-stage driving gear 8, and output-shaft gear 10. At this time, the power from the two drive motors 2 is coupled at the output-shaft gear 10 and transmitted through the output shaft 9 to the lead screw 13, thereby driving the lead screw nut 14 to move axially in the extension direction. This causes the rod sleeve 16 to extend out of the cylinder barrel 15 until arrival at a limit stop of the lead screw guide bushing 18.

Under medium-to-heavy load retraction conditions, both drive motors 2 rotate reversely at the same time. The power transmission path of the drive motors 2 is the same as that under the extension conditions: the power is coupled at the output-shaft gear 10 and transmitted through the output shaft 9 to the lead screw 13. This causes the lead screw nut 14 to move axially in the retraction direction, thereby driving the rod sleeve 16 to retract into the cylinder barrel 15 until arrival at the limit stop of the lead screw guide bushing 18.

When the electric cylinder is under light-load conditions, one of the drive motors 2 is selected for outputting power while the other drive motor remains inactive. The extension and retraction operations under these conditions are the same as those under medium-to-heavy load conditions.

Under low-speed, medium-to-heavy load conditions, two-motor drive is selected. Under high-speed, light-load conditions, single-motor drive is selected. This arrangement meets load requirements while ensuring that the drive motors operate on a high-efficiency plateau.

### Embodiment 2

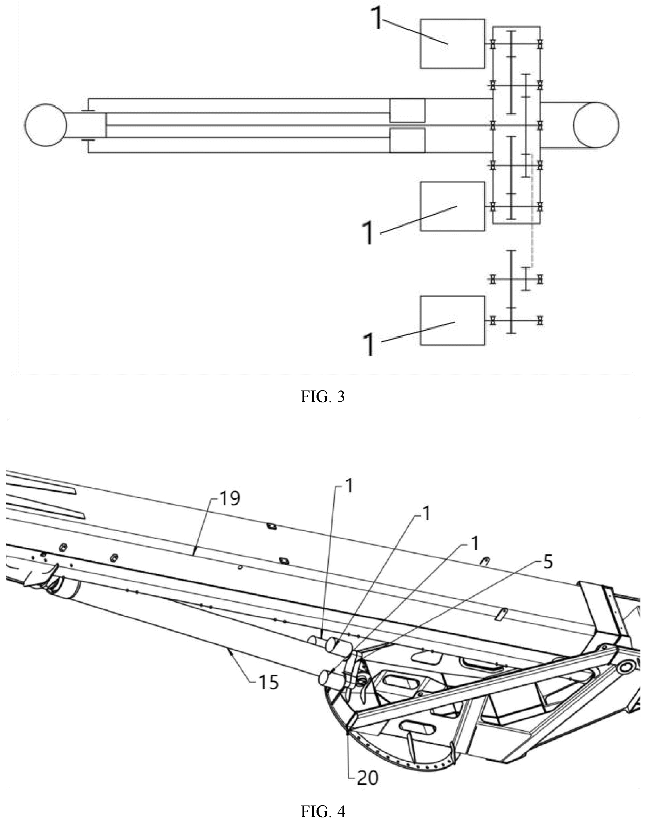

As shown in FIG. 3, on the basis of Embodiment 1, this embodiment arranges three drive assemblies instead. The additional third drive assembly is disposed above the cylinder barrel.

Referring to FIG. 4, the electric cylinder with three drive assemblies is used as a crane boom cylinder. During installation, the base 12 is connected to a pin hole on the slewing platform 20 of the crane through a fixing pin, and the rod head 17 is connected to the pin hole on the boom 19 of the crane through a fixing pin.

The working principles of the electric cylinder with three drive assemblies are as follows:
When the electric cylinder is under heavy-load conditions, the three drive motors 2 output power simultaneously.

When the electric cylinder is under light-load conditions, the third drive motor 2 outputs power, and the remaining two drive motors 2 remain inactive.

Under heavy-load conditions, three-motor drive is selected. Under light-load conditions, single-motor drive is selected. Under medium-load conditions, two-motor drive is selected. This arrangement meets load requirements while ensuring that the drive motors operate on a high-efficiency plateau.

### Embodiment 3

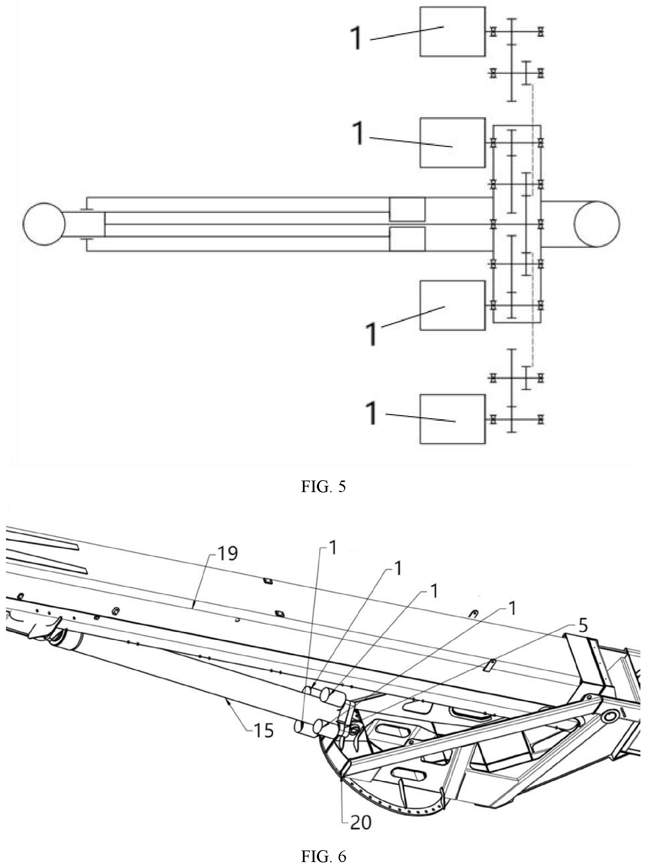

As shown in FIG. 5, on the basis of Embodiment 2, this embodiment arranges four drive assemblies instead. The additional fourth drive assembly is disposed below the cylinder barrel 15, and located at a position symmetrical with the third drive assembly.

Referring to FIG. 6, the electric cylinder with three drive assemblies is used as a crane boom cylinder. During installation, the base 12 is connected to a pin hole on the slewing platform 20 of the crane through a fixing pin, and the rod head 17 is connected to the pin hole on the boom 19 of the crane through a fixing pin.

The working principles of the electric cylinder with four drive assemblies are as follows:
When the electric cylinder is under heavy-load conditions, the four drive motors 2 output power simultaneously.

When the electric cylinder is under light-load conditions, two symmetrical drive motors 2 are selected for outputting power, and the remaining two drive motors 2 remain inactive.

When the electric cylinder is under medium-load conditions, three drive motors 2 are selected randomly for outputting power, and the remaining one drive motor 2 remains inactive.

The above descriptions are merely preferred embodiments of this application. It is noted that various improvements and variations, which may be made by a person of ordinary skill in the art without departing from the technical principles of this application, shall still fall within the protection scope of this application.

## Claims

1. A multi-motor high-load electric cylinder for a crane, **characterized by** comprising: a plurality of drive assemblies, a reduction gearbox housing, and a cylinder barrel, wherein the cylinder barrel is connected to one side of the reduction gearbox housing, and the plurality of drive assemblies are uniformly disposed on the reduction gearbox housing around the cylinder barrel;
each of the drive assemblies comprises a drive motor, an input shaft, and an intermediate shaft; the drive motor is connected to the input shaft; the input shaft is provided with an input-shaft driving gear; the intermediate shaft is provided with an intermediate-shaft first-stage driven gear and an intermediate-shaft second-stage driving gear; the intermediate-shaft first-stage driven gear meshes with the input-shaft driving gear; an output shaft is provided at a middle of the reduction gearbox housing; the output shaft extends into the cylinder barrel and is connected to a lead screw; the output shaft is provided with an output-shaft gear; and the output-shaft gear meshes with the intermediate-shaft second-stage driving gear; and
the lead screw is disposed in a rod sleeve, the rod sleeve is sleeved inside the cylinder barrel, one end of the rod sleeve is provided with a lead screw nut, and another end of the rod sleeve extends out of the cylinder barrel and is connected to a rod head, and the lead screw nut is threadedly connected to the lead screw.

2. The multi-motor high-load electric cylinder for a crane according to claim 1, **characterized in that** the input shaft, the intermediate shaft, and the output shaft are each connected to the reduction gearbox housing through a bearing.

3. The multi-motor high-load electric cylinder for a crane according to claim 2, **characterized in that** the bearing comprises a left bearing and a right bearing; and the input shaft, the intermediate shaft, and the output shaft each extend through the reduction gearbox housing and are each connected to two sides of the gearbox housing through the left bearing and the right bearing.

4. The multi-motor high-load electric cylinder for a crane according to claim 1, **characterized in that** a base is connected to an opposite side of the reduction gearbox housing, the opposite side being connected to the cylinder barrel; the base is coaxial with the cylinder barrel; the base is configured to be connected to a slewing platform of the crane; and the rod head is configured to be connected to a boom of the crane.

5. The multi-motor high-load electric cylinder for a crane according to claim 1, **characterized in that** the lead screw nut is in sliding fit engagement with an interior of the cylinder barrel.

6. The multi-motor high-load electric cylinder for a crane according to claim 1, **characterized in that** an end portion of the cylinder barrel is in sliding fit engagement with the rod sleeve such that the rod sleeve is extendable and retractable in the cylinder barrel.

7. The multi-motor high-load electric cylinder for a crane according to claim 1, **characterized by** further comprising a lead screw guide bushing, wherein the lead screw guide bushing is disposed at one end of the lead screw and is in sliding fit engagement with an inner wall of the rod sleeve, the end being located away from the lead screw nut; and the lead screw guide bushing is configured to provide guiding and limiting functions during extension and retraction of the rod sleeve.
